# EUROPÄISCHE PATENTSCHRIFT

(11) **EP 1 488 680 B1**
(45) Veröffentlichungstag und Bekanntmachung des Hinweises auf die Patenterteilung: **18.07.2007**
(21) Anmeldenummer: 04014277.0
(22) Anmeldetag: 18.06.2004
(51) Int. Cl.: A01D 78/10

(54) **Heuwerbungsmaschine**
Haymaking machine
Machine de fenaison

(30) Priorität: 20.06.2003 DE 10327884
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Martensen, Klaus, Dr.-Ing., 48477 Hörstel (DE); Afting, Andreas, Dipl.-Ing., 48488 Emsbüren (DE)

(56) Entgegenhaltungen:
- EP-A- 0 937 382
- EP-A- 1 095 555
- EP-A- 1 364 573
- EP-A- 1 433 372
- DE-A- 2 601 304
- DE-C- 19 716 379

## Beschreibung

Die Erfindung bezieht sich auf eine Heuwerbungsmaschine, insbesondere zum Schwaden von landwirtschaftlichem Halmgut, mit umlaufend angetriebenen und über Stützräder auf dem Erdboden abstützbaren sowie über Ausleger aus einer Arbeits- und Betriebsstellung in eine verschwenkte Transportstellung überführbaren Kreiselrechen in vorzugsweise in Fahrtrichtung im wesentlichen V-förmiger Anordnung.

Heuwerbungsmaschinen der vorgenannten Art sind zum Beispiel aus der DE 197 16 379 C1 bekannt. Bei dieser Maschine sind insgesamt vier Kreiselrechen in V-förmiger Anordnung vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Nachteilig hierbei ist, dass während der Kurvenfahrt, insbesondere bei im Durchmesser größeren Kreiselrechen Kurvenradien entstehen, die das Lenkverhalten der Maschine negativ beeinflussen und zudem eine saubere Schwadbildung erschweren.

Ein weiterer aus der EP 1 433 372 A1, die einen Stand der Technik nach Artikel 54(3) EPÜ darstellt, bekannt gewordener Kreiselschwader umfasst sechs gestaffelt zueinander angeordnete Schwadkreisel, die über, um horizontal ausgerichtete und in Fahrtrichtung weisende Schwenkachsen schwenkbar, an einem Fahrgestell angelenkte Ausleger aus einer bodenparallelen Arbeits- und Betriebsstellung in eine vertikale Transportstellung verbringbar sind. Zur Anpassung der Arbeitsbreite an unterschiedliche Einsatzbedingungen kann die Länge der teleskopisch ausgebildeten Ausleger verändert werden.

Es ist daher Aufgabe der vorliegenden Erfindung, die vorgenannten Nachteile zu vermeiden und eine Heuwerbungsmaschine der eingangs genannten Art zur Verfügung zu stellen, bei der Kurvenfahrten und eine saubere Schwadbildung während einer Kurvenfahrt erleichtert sind.

Zur Lösung dieser Aufgabe zeichnet sich die Heuwerbungsmaschine der eingangs genannten Art dadurch aus, dass den Kreiselrechen in Fahrtrichtung zwei weitere, die maximale Arbeitsbreite bestimmende Kreiselrechen vorgeordnet sind und das in der Arbeits- und Betriebsstellung über einen Ausleger die weiteren Kreiselrechen in eine von der Maschinenlängsachse wegbewegte oder in eine zur Maschinenlängsachse hinbewegte Arbeits- und Betriebsstellung überführbar sind, in der der/die Kreiselrechen hinsichtlich seiner/ihrer Arbeits- und Betriebsstellung in einem derartigen Bereich verstellbar ist/sind, dass dieser/diese den in Fahrtrichtung nachgeordneten Kreiselrechen um ein Maß zwischen 10 % und 40 % überlappt(en).

Damit ist eine Heuwerbungsmaschine zur Verfügung gestellt mit verbesserter Überdeckung der einander in Fahrtrichtung nachgeordneten Kreiselrechen im Kurvenbereich. So kann der vordere kurvenäußere Kreisel während der Kurvenfahrt zur Maschinenlängsachse hinbewegt und ein kurveninnerer Kreiselrechen von der Maschinenlängsachse weg und mithin nach außen verstellt werden. So ist es möglich, bei V-förmiger Anordnung der Kreiselrechen beide vorderen Kreiselrechen zu verstellen. Für viele Anwendungsfälle reicht es jedoch auch aus, nur einen einzelnen Kreiselrechen zu verstellen.

Die Weg- bzw. Hinbewegung der Kreiselrechen während der Kurvenfahrt kann automatisch erfolgen, z. B. durch eine Kopplung mit der Lenkbewegung einer gelenkten Achse der Maschine. Die Hin- und Wegbewegung kann beispielsweise über einen Ausleger erfolgen, der seinerseits einen oder mehrere dem Kreiselrechen zugeordnete(n), um eine horizontal ausgerichtete Schwenkachse schwenkbeweglichen Schwenkausleger aufweist, der beispielsweise mittels Hydraulikzylinder bewegbar ist. Besonders vorteilhaft ist, wenn ein solcher Schwenkausleger auch für eine sichere Überführung des Kreiselrechens in die Transportstellung Sorge trägt und z. B. mit weiteren Auslegerarmen, die ihrerseits über Schwenkachsen verschwenkbar sind, zusammenarbeitet. Als besonders vorteilhaft hat sich herausgestellt, wenn ein Ausleger durch vier Schwenkachsen unterteilte Auslegerarme aufweist, womit eine Überführung in eine äußerst raumsparende Transportstellung möglich ist. Besonders vorteilhaft ist, wenn der Hin- und Wegbewegungsbereich der vorderen Kreiselrechen sich in einem Bereich bewegt, der es erlaubt, daß ein nachgeordneter Kreiselrechen um ein Maß zwischen 10 % und 40 % zu überlappen ist. Während der Verstellung ist es ebenfalls möglich, die Kreiselrechen nicht nur zur Maschinenlängsmittelachse hin bzw. von dieser weg zu bewegen, sondern auch den Abstand der Vertikallängsmittelachsen von zwei in Fahrtrichtung nachgeordneten Kreiselrechen zu verändern, indem beispielsweise ein kurvenäußerer Kreiselrechen näher an den nachgeordneten Kreiselrechen heranrückt. Dies ist beispielsweise möglich, indem ein Auslegerarm Bereiche aufweist, die in Fahrtrichtung schräg nach hinten ausgerichtet sind.

Zur weiteren Erläuterung der Erfindung wird auf weitere Unteransprüche, die nachfolgende Beschreibung sowie die Zeichnung verwiesen.

In der Zeichnung zeigen:
- Fig. 1: eine Draufsicht auf ein Ausführungsbeispiel einer Heuwerbungsmaschine nach der Erfindung;
- Fig. 2: eine Vorderansicht eines Teils der Heuwerbungsmaschine nach der Erfindung mit dem von der Maschinenlängsachse wegbewegten vorderen äußeren Kreiselrechen, und
- Fig. 3: eine zur Fig. 2 analoge Darstellung mit zur Maschinenlängsachse hinbewegten vorderen äußeren Kreiselrechen.

In der Zeichnung sind allgemein gleichwirkende Teile mit übereinstimmenden Bezugszeichen beziffert.

In der Zeichnung ist allgemein mit 1 eine Heuwerbungsmaschine beziffert, die in dem gezeigten Ausführungsbeispiel als selbstfahrende Heuwerbungsmaschine ausgebildet ist. Die gezeigte selbstfahrende Heuwerbungsmaschine hat ein Fahrzeugchassis 3, Laufräder 4 sowie eine Fahrerkabine 5. Die Heuwerbungsmaschine 1 fährt in Fahrtrichtung 6. Die vorderen Laufräder 4 sind an einer gelenkten Maschinenachse 7 und die in Fahrtrichtung hinteren Laufräder 4 an einer ungelenkten Maschinenachse 8 angeordnet. In einer in Fahrtrichtung 6 V-förmigen Anordnung sind hintere Kreiselrechen 9 und diesen Kreiselrechen 9 in Fahrtrichtung 6 vorgeordnete Kreiselrechen 10 sowie zwei vordere, die äußere Arbeitsbreite bestimmende Kreiselrechen 11 vorgesehen, so daß sich insgesamt eine selbstfahrende Heuwerbungsmaschine mit sechs Kreiselrechen in V-förmiger Anordnung ergibt mit einer Gesamtarbeitsbreite von etwa zwanzig Metern.

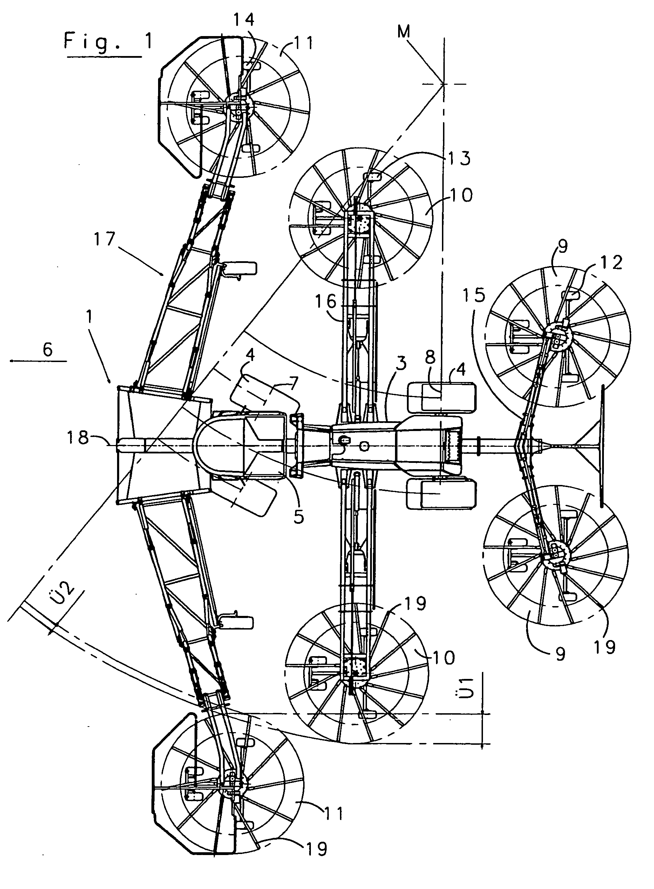

Die Kreiselrechen 9, 10 und 11 sind ihrerseits über Stützräder 12, 13 und 14 abgestützt und über Ausleger 15, 16 und 17 schwenkbar am Maschinenchassis 3 gehaltert, so daß sie aus der in den Fig. 1 bis 3 gezeigten Arbeits- und Betriebsstellung in eine hochverschwenkte Transportstellung überführbar sind.

Die Kreiselrechen 9, 10 und 11 sind von ihrer Ausbildung und Anordnung derart aufeinander abgestimmt, daß sie auch bei Kurvenfahrt in der Lage sind, einen exakten Schwad zu legen und das Kurvenverhalten der Maschine während der Arbeitsfahrt nicht zu beeinträchtigen. So sind die vorderen Kreiselrechen 11 derart angeordnet und gehaltert, daß sie in der abgelassenen Arbeit- und Betriebsstellung lageveränderlich sind, und zwar einerseits zur Maschinenlängsachse 18 aber auch zu dem in Fahrtrichtung 6 nachgeordneten Kreiselrechen, so daß die exemplarisch in der Fig. 1 veranschaulichten Überlappungsmaße Ü1 und Ü2 zwischen den Rechzinken 19 der Kreiselrechen 10 und 11 darstellbar sind. Diese Überlappungsmaße Ü1 und Ü2 ergeben sich aus der Lage des Momentanpoles M, der sich aufgrund des Lenkeinschlages der Laufräder 4 der gelenkten Achse 7 ergibt.

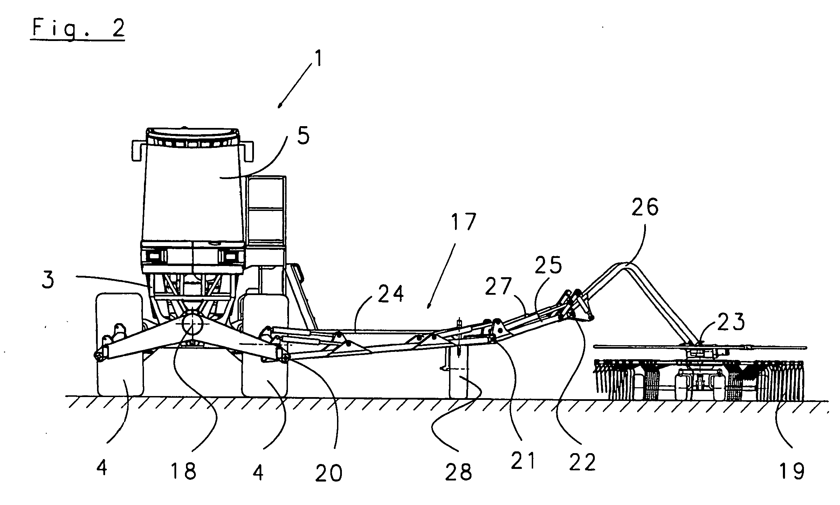

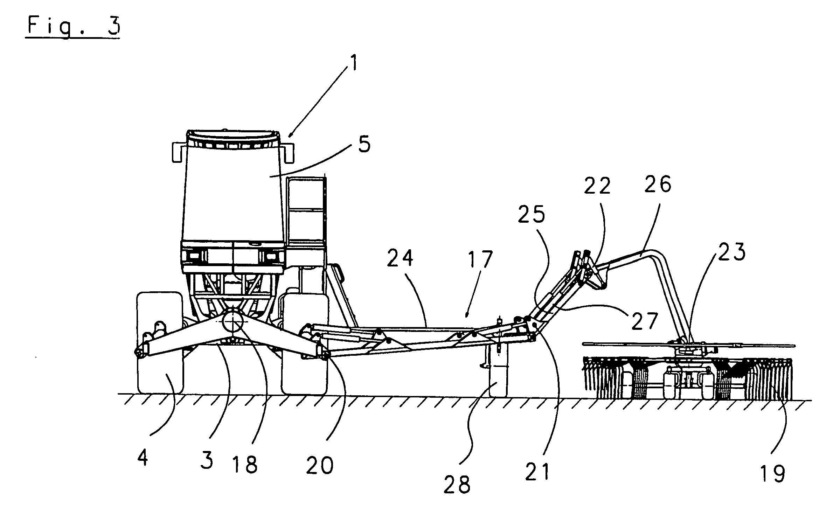

Wie im einzelnen auch näher aus den Fig. 2 und 3 hervorgeht, ist der Ausleger 17 derart ausgebildet, daß der Kreiselrechen 11 zur Maschinenlängsachse 18 hin und von dieser weg zu bewegen ist. Dazu ist der Ausleger 17 dreiteilig ausgebildet und hat insgesamt vier Schwenkachsen, nämlich die Schwenkachsen 20, 21, 22 und 23, sowie Schwenkarme 24, 25 und 26. Durch eine Bewegung der Hydraulikzylinder 27, die steuerungstechnisch auch gekoppelt sein kann mit dem Lenkeinschlag der Laufräder 4 der gelenkten Maschinenachse 7 ist der Kreiselrechen 11 hin zur Maschinenlängsachse 18 zu bewegen (Fig. 3) oder von dieser wegzubewegen (Fig. 2). Der Ausleger 17 kann sich seinerseits über ein Laufrad 28 noch zusätzlich in der Arbeits- und Betriebsstellung auf dem Erdboden abstützen. Damit ist eine Heuwerbungsmaschine zur Verfügung gestellt, bei der Kurvenfahrten außerordentlich einfach und wirkungsvoll bei sauberer Schwadbildung zu vollziehen sind.

Es ist selbstverständlich, daß die aus Vorstehendem ersichtliche Erfindung nicht nur bei Heuwerbungsmaschinen, sondern auch bei solchen Maschinen mit anderen rotierenden Werkzeugen Anwendung finden kann, wo es auf die Lage des Momentanpol und zum Beispiel eine saubere Erntegutablage ankommt. So können beispielsweise auch Mähmaschinen mit rotierenden Mähwerken in analoger Anordnung der Mähwerke wie die Kreiselrechen mit entsprechenden Abständen vorgesehen sein.

## Patentansprüche

1. Heuwerbungsmaschine (1), insbesondere zum Schwaden von landwirtschaftlichem Halmgut, mit vier umlaufend angetriebenen und über Stützräder (12, 13) auf dem Erdboden abstützbaren sowie über Ausleger (15, 16) aus einer Arbeits- und Betriebsstellung in eine verschwenkte Transportstellung überführbaren Kreiselrechen (9, 10), die in der Arbeits- und Betriebsstellung in Fahrtrichtung im wesentlichen V-förmig ausgerichtet sind, **dadurch gekennzeichnet, daß** den Kreiselrechen in Fahrtrichtung (6) zwei weitere, die maximale Arbeitsbreite bestimmende Kreiselrechen (11) vorgeordnet sind, wobei die weiteren Kreiselrechen (11) in der Arbeits- und Betriebsstellung über Ausleger (17) in eine von der Maschinenlängsachse wegbewegte oder in eine zur Maschinenlängsachse (18) hinbewegte Arbeits- und Betriebsstellung überführbar sind, in der der/die Kreiselrechen (11) hinsichtlich seiner/ihrer Arbeits- und Betriebsstellung in einem derartigen Bereich verstellbar ist/sind, dass dieser/diese den in Fahrtrichtung nachgeordneten Kreiselrechen (10) um ein Maß zwischen 10 % und 40 % überlappt(en).

2. Heuwerbungsmaschine nach Anspruch 1, **dadurch gekennzeichnet, dass** die äußeren Kreiselrechen (11) in ihrer Arbeits- und Betriebsstellung in Abhängigkeit der Lenkbewegung einer gelenkten Maschinenachse (7) hin zur Maschinenlängsachse (18) oder von dieser wegbewegbar sind.

3. Heuwerbungsmaschine nach Anspruch 1 oder 2, **dadurch gekennzeichnet, dass** die Ausleger (17) der hin- und wegbewegbaren Kreiselrechen (11) um im wesentlichen horizontal ausgerichtete Schwenkachsen (21, 22) schwenkbewegliche Schwenkausleger (25, 26) umfassen.

4. Heuwerbungsmaschine nach einem der Ansprüche 1 bis 3, **dadurch gekennzeichnet, dass** der Ausleger (17) durch vier Schwenkachsen (20, 21, 22, 23) unterteilte Auslegerarme (24, 25, 26) aufweist und ein Schwenkausleger (26) der außen gelegene Auslegerarm ist.

5. Heuwerbungsmaschine nach einem der Ansprüche 1 bis 4, **dadurch gekennzeichnet, dass** der vordere Kreiselrechen (11) hinsichtlich des Abstandsmaßes seiner Vertikallängsmittelachse zur Vertikallängsmittelachse eines in Fahrtrichtung nachgeordneten Kreiselrechens (10) verstellbar ausgebildet ist.

## Claims

1. Haymaking machine (1), particularly for windrowing stalked agricultural crops, having four rotary rakes (9, 10) which are driven in rotation, which are able to be supported on the ground by means of supporting wheels (12, 13), which are able to be transferred by means of booms (15, 16) from a working and operating position to a pivoted position for transport and which, in the working and operating position, are aligned substantially in a vee shape in the direction of travel, **characterised in that** the rotary rakes have positioned in front of them in the direction of travel (6) two further rotary rakes (11) which determine the maximum working width, the further rotary rakes (11) being able to be transferred, in the working and operating position, by means of booms (17), to a working and operating position in which they are moved away from the longitudinal axis of the machine or to a working and operating position in which they are moved towards the longitudinal axis (18) of the machine, in which positions the rotary rake/rakes (11) can be adjusted in respect of its/their working and operating position within a range such that it/they overlaps/overlap the rotary rakes (10) positioned downstream in the direction of travel by an amount of between 10% and 40%.

2. Haymaking machine according to claim 1, **characterised in that**, in their working and operating position, the outer rotary rakes (11) can be moved towards or away from the longitudinal axis (18) of the machine as a function of the steered movement of a steered machine axle (7).

3. Haymaking machine according to claim 1 or 2, **characterised in that** the booms (17) of the rotary rakes (11) able to be moved towards or away comprise pivoting booms (25, 26) which are able to move by pivoting about substantially horizontally aligned axes of pivot (21, 22).

4. Haymaking machine according to one of claims 1 to 3, **characterised in that** the boom (17) has boom arms (24, 25, 26) divided by four axes of pivot (20, 21, 22, 23), and one pivoting boom (26) is the boom arm situated on the outside.

5. Haymaking machine according to one of claims 1 to 4, **characterised in that** the front rotary rake (11) is formed to be adjustable in respect of the distance by which its vertical longitudinal centre axis is spaced away from the vertical longitudinal centre axis of a rotary rake (10) positioned downstream in the direction of travel.

## Revendications

1. Machine de fenaison (1), en particulier pour la mise en andains de chaumes agricoles, comportant quatre râteaux circulaires (9, 10) entraînés en rotation et pouvant s'appuyer sur le sol par l'intermédiaire de roues d'appui (12, 13) et être transférés par des bras (15, 16) d'une position de travail et de fonctionnement dans une position de transport pivotée, et qui, dans la position de travail et de fonctionnement, sont orientés essentiellement en forme de V dans le sens de la marche,
**caractérisée en ce que**
les râteaux circulaires sont précédés, dans le sens de la marche (6), par deux autres râteaux circulaires (11) déterminant la largeur de travail maximale, les autres râteaux circulaires (11) dans la position de travail et de fonctionnement pouvant être transférés par des bras (17) dans une position de travail et de fonctionnement s'éloignant ou se rapprochant de l'axe longitudinal (18) de la machine, dans laquelle le/les râteaux circulaires (11) peut(vent) être déplacé(s), du point de vue de leur position de travail et de fonctionnement, sur une zone telle qu'ils recouvrent le râteau circulaire (10), en aval dans le sens de la marche, d'une mesure comprise entre 10 et 40 %.

2. Machine de fenaison selon la revendication 1,
**caractérisée en ce que**
les râteaux circulaires (11) extérieurs dans leur position de travail et de fonctionnement, peuvent se rapprocher ou s'éloigner de l'axe longitudinal (18) de la machine en fonction du mouvement de braquage de l'essieu guidé (7) de la machine.

3. Machine de fenaison selon la revendication 1 ou 2,
**caractérisée en ce que**
les bras (17) des râteaux circulaires (11) pouvant se rapprocher et s'éloigner, comportent des bras pivotants (25, 26) pouvant pivoter autour d'axes de pivotement (21, 22) essentiellement horizontaux.

4. Machine de fenaison selon l'une quelconque des revendications 1 à 3,
**caractérisée en ce que**
le bras (17) présente des bras dépliables (24, 25, 26) divisés par quatre axes de pivotement (20, 21, 22, 23) et est un bras pivotant (26) du bras dépliable situé à l'extérieur.

5. Machine de fenaison selon l'une quelconque des revendications 1 à 4,
**caractérisée en ce que**
le râteau circulaire avant (11) peut être déplacé du point de vue de la distance entre son axe longitudinal central vertical et l'axe longitudinal central vertical d'un râteau circulaire (10) situé en aval dans le sens de la marche.
